# EUROPÄISCHE PATENTSCHRIFT

(11) **EP 1 996 008 B1**
(45) Veröffentlichungstag und Bekanntmachung des Hinweises auf die Patenterteilung: **07.04.2021**
(21) Anmeldenummer: 07711205.0
(22) Anmeldetag: 26.02.2007
(51) Int. Cl.: A01G 9/14

(54) **FILTEREINRICHTUNG UND GEWÄCHSHAUS**
FILTER DEVICE AND GREENHOUSE
DISPOSITIF DE FILTRAGE ET SERRE

(30) Priorität: 24.02.2006 US 776365 P
(43) Veröffentlichungstag der Anmeldung: 03.12.2008
(60) Teilanmeldung: 16001096.3
(73) Patentinhaber: Sun Orbit GmbH, 72513 Hettingen (DE)
(72) Erfinder: KLEINWÄCHTER, Jürgen, 79400 Kandern (DE)
(74) Vertreter: FARAGO Patentanwälte
(86) Internationale Anmeldenummer: PCT/DE2007/000352
(87) Internationale Veröffentlichungsnummer: WO 2007/095934

(56) Entgegenhaltungen:
- EP-A- 1 090 955
- EP-A- 1 686 140
- EP-A- 1 808 067
- EP-A1- 0 077 496
- EP-A1- 0 927 729
- WO-A-00/20805
- DE-A1- 3 223 445
- DE-A1- 3 828 575
- JP-A- 7 031 295
- JP-A- 8 258 228
- US-A- 4 198 953
- US-A- 4 215 672

## Beschreibung

Die Erfindung betrifft eine Filtereinrichtung und ein Gewächshaus.

Eine geschickte Ausnutzung der regenerativen Energien, Pflanzenwachstum auch in ariden Gebieten der Welt und eine nachhaltige Senkung des CO₂-Ausstoßes rücken immer mehr in das nachhaltige Interesse der Menschheit.

Die Patentschrift US 4,198,953 offenbart ein Gewächshaus mit einer isolierten und opaken Struktur, deren innere Wände geformt und coloriert sind, wobei eine Filtereinrichtung zum Filtern von einfallendem Licht einen Spektralbereichsreflektor und einen Sekundärreflektor aufweist. Es wird reflektiertes Licht vom Sekundärreflektor zum Pflanzbereich gelenkt.

Weitere Treibhaus-Technologien sind aus der DE 199 82 011, der DE 38 28 575 A1, der DE 32 23 445 A1, der EP 1 808 067 A1, der EP 0 927 729 A1, der EP 1 686 140 A1, der EP 1 090 955 A1, der EP 0 077 496 A1, der US 4,215,672, der JP 8-258228, der 7-31295 und der WO 00/20805 A1 bekannt.

Der Erfindung liegt die Aufgabe zu Grunde, ein verbessertes System zur Verfügung zu stellen.

Diese Aufgabe löst eine Filtereinrichtung mit den Merkmalen des Patentanspruchs 1.

Optionale vorteilhafte Merkmale sind den abhängigen Patentansprüchen zu entnehmen.

Unterstützend löst die gestellte Aufgabe eine transparente Gewächshaushülle, welche eine Fluorpolymerfolie aufweist.

Um ein Gewächshaus möglichst vorteilhaft zu bauen, muss dieses eine transparente Hülle besitzen, welche möglichst vollständig das gesamte Solarspektrum durchlässt.

Nach Erkenntnissen des Erfinders eignen sich hierfür besonders Fluorpolymerfolien, da diese nach Versuchsergebnissen bis zu 97 % des gesamten Lichtstromes passieren lassen.

Besonders günstig wirkt sich hierbei die niedrige optische Brechzahl n von ungefähr 1,3 aus, welche zu geringen partiellen Reflektionen auf der Vorder- und Rückseite der Folien führt. In Folge dessen wird ein großer Teil des Lichts durchgelassen, auch bei schrägem Lichteinfall auf die Hülle.

Insbesondere ist die sehr hohe Transmission im UVA-Bereich von Vorteil. Diese ist nicht nur für die Pflanzen günstig, sondern trägt auch zu einer langen Lebensdauer der Folien bei, denn das energiereiche UV-Licht zerstört die Folien nicht, wenn es transmittiert wird, sondern nur dann, wenn es absorbiert wird. Die relativ langen Fluorpolymerketten bleiben auch bei UV-Bestrahlung stabil.

Außerdem ist eine Fluorpolymerfolie chemisch weitestgehend inert und hat keine Weichmacher. In Folge der geringen Oberflächenenergien sind die Oberflächen außerdem in der Lage, sich weitestgehend selbst von Schmutzpartikeln zu reinigen. Diese finden nur eine geringe Adhäsionskraft an der Oberfläche. Außerdem sind Fluorpolymerfolien mechanisch sehr stabil, insbesondere breiten sich etwaige Risse nicht weiter in der Folie aus. In Folge der vorteilhaften mechanischen Eigenschaften von Fluorpolymerfolien können relativ großflächige Hüllen, wie sie bei großen Trägerabständen des Gewächshauses vorkommen, auch in geringer Foliendicke ausführt werden. Der Erfinder schlägt eine Foliendicke zwischen etwa 100 µm und 200 µm vor.

Unter einer Fluorpolymerfolie als Gewächshaushülle ist somit das gesamte terrestrische Sonnenlichtspektrum zumindest weitgehend vollständig erhalten und kann gezielt weiterverwendet werden. Insbesondere wird es möglich, mit gekoppelten Filtersystemen und/oder durch selektive Trennung einzelner Spektralbereiche das Sonnenlichtspektrum als Nutzenergie unterschiedlichen Anwendungen zuzuführen.

Eine beispielhafte Trennung der Lichtspektralbereiche ist in der DE 199 82 011 zu sehen. Dort werden Fresnellinsen mit linien- oder punktförmiger Abbildung der Sonne ein- oder zweiachsig nachgeführt. Diese konzentrieren nur das direkte Sonnenlicht auf einen Receiver. Dieser ist beispielsweise photovoltaisch, thermisch oder photochemisch ausgestattet. Das diffuse Tageslicht hingegen dringt durch die Fresneloptik hindurch und dient somit dem Pflanzenwachstum.

Unterstützend löst die gestellte Aufgabe eine Filtereinrichtung zum Filtern von einfallendem Licht in ein Gewächshaus mit einem Fluidfilter, wobei die Filtereinrichtung eine im Lauf des Lichts vor dem Fluidfilter liegende Sammeloptik aufweist.

Gewächshäuser mit Fluidfiltern sind bekannt. In einem Modellgewächshaus in Israel ist eine ganzflächige doppelwandige Hülle für ein Treibhaus konstruiert worden. In diese großflächige doppelwandige Hülle wurde Wasser als Filterflüssigkeit eingefüllt. Wasser ist für das einfallende sichtbare Solarspektrum hochtransparent und absorbiert stark ab 1,1 µm Wellenlänge das Licht in Kombination mit Spuren von Salzen, Metallen oder sonstigen geeigneten Zusatzstoffen, die zum Absorptionsspektrum des Chlorophylls komplementär sind.

Großflächige fluiddurchströmte Doppelhüllen sind jedoch relativ störanfällig, beispielsweise für Lecks. Außerdem sind sie teuer und sehr schwer. Der vorgestellte zweite Aspekt der Erfindung konzentriert einen Fluidfilter mit einer Sammeloptik. Wenn eine Sammeloptik im Laufweg des Lichts vor dem Fluidfilter angeordnet ist, kann der Fluidfilter in kleinen räumlichen Dimensionen ausgeführt sein und dennoch die gewünschte Filterung bewirken. Dies macht die Filtereinrichtung erheblich kompakter und kostengünstiger.

Es wird vorgeschlagen, dass das Filterfluid in einem Absorber geführt ist, insbesondere in Rohren, Zylindern oder Kugeln. Diese sind inhärent dicht und außerdem sehr preiswert. Außerdem wird nur wenig Filterfluid benötigt.

Die Filtereinrichtung weist bevorzugt eine hochkonzentrierende Sammellinse auf. Der Wirkungsgrad der Umwandlung der Strahlung in Wärme steigt mit der Konzentration des Lichts.

Bevorzugt sind Mittel zum Verlagern des Fluidfilters gegenüber der Sammeloptik vorgesehen, insbesondere zum reversiblen Verlagern eines Absorbers gegenüber einem Brennpunkt oder einer Brennlinie.

Wenn eine Sammeloptik vorgesehen ist, kann diese, beispielsweise die Linsen der Sammeloptik, wahlweise so geschwenkt werden, dass für eine bestimmt Zeit das volle oder ein wählbarer Teil des vollen Spektrums zu den Pflanzen durchdringt. Alternativ und kumulativ ist es möglich, die Absorber aus der Fokalebene der Sammeloptik hinaus zu bewegen, um den selben Effekt zu erreichen. So kann beispielsweise in den Morgen- und Abendstunden oder im sonnenschwächeren Winter eine höhere Energie der Strahlung zu den Pflanzen durchgelassen werden.

Hierdurch wird es möglich, über einen geschlossenen Regelkreis zwischen der Optik und den Pflanzen die Lichtverhältnisse in Funktion des variablen Bedarfs der Pflanze einzustellen, und zwar insbesondere abhängig von ihrem Wachstumszustand, der Jahreszeit und sonstiger Bioparameter.

Diese Variabilität gestattet es, das System aus Optik und Pflanzen im Hinblick auf den jeweils angestrebten Haupteffekt zu regeln, beispielsweise "mehr Biomasse, weniger technische Energie" oder umgekehrt.

In konkreter Ausführung können in den Brennlinien oder Brennpunkten transparente Rohre, Kugeln, Zylinder oder ähnliche Absorberbehälter für das Filterfluid angeordnet sein. Diese sind bevorzugt jeweils der Fokusform angepasst.

Sie werden von einem Medium durchflossen, welches den PAR-Strahlenbereich passieren lässt. Der PAR-Strahlenbereich macht etwa 10 % der Gesamtstrahlung aus. Der Rest soll absorbiert werden und in Wärme umgewandelt werden. Dies hat zu Folge, dass ca. 90 % der Strahlung in Nutzwärme umgewandelt wird, während etwa 10 % der Strahlung direkt dem Pflanzenwachstum dient.

Bevorzugt lässt das Filterfluid das PAR-Spektrum des Lichts mindestens zu 50 % passieren, bevorzugt mindestens zu 80 %, absorbiert aber einen Überschuss über das PAR-Spektrum zu mindestens 50 %, bevorzugt zu mindestens 80 %.

Hierdurch wird einerseits den Pflanzen das optimale Licht zur Photosynthese angeboten. Andererseits wird überschüssige Wärme entzogen. Diese Wärme kann gespeichert werden und beispielsweise in kalten Nächten den Pflanzen wieder als Heizwärme zugeführt werden. Pflanzen benötigen möglichst konstante Wachstumstemperaturen, bevorzugt um etwa 20 °C.

Gemäß der hier vorliegenden Erfindung löst die gestellte Aufgabe eine Filtereinrichtung zum Filtern von einfallendem Licht für ein Gewächshaus, wobei die Filtereinrichtung einen Spektralbereichsreflektor und einen Sekundärreflektor aufweist, wobei der Spektralbereichsreflektor so eingerichtet ist, dass er einen Bereich des PAR-Spektrums zum Sekundärreflektor filterreflektiert, wobei übriges Licht durch den Spektralbereichsreflektor zu einem Pflanzbereich passieren kann und filterreflektiertes Licht vom Sekundärreflektor zum Pflanzbereich gelenkt wird.

Mit einem solchen zweistufigen Optiksystem ist es möglich, einen Bereich des einstrahlenden Lichts zu reflektieren. Dasjenige Licht, welches passieren gelassen wird, gelangt zum Pflanzbereich. Dasjenige Licht, welches vom Filter, also vom Spektralbereichsreflektor, reflektiert wird, hat einen längeren Laufweg. Durch den längeren Laufweg ist es möglich, diesen Bereich des Spektrums gezielt zu behandeln. Erst nach dieser Behandlung soll auch dieser Bereich des PAR-Spektrums zum Pflanzbereich gelenkt werden.

Eine solche Doppeloptik lässt sich besonders gut dann einsetzen, wenn der Spektralbereichsreflektor zumindest einen Teil des Spektrums zwischen etwa 500 nm und etwa 580 nm reflektiert, bevorzugt zumindest zwischen etwa 520 nm und 560 nm.

Der Erfinder hat herausgefunden, dass das grüne Licht nur in praktisch unerheblichem Maße zur Photosynthese beiträgt, obwohl in diesem Bereich des PAR-Spektrums der relativ größte Teil an Energie einfällt. Grünes Licht ist im Bereich zwischen etwa 500 nm und etwa 580 nm zu finden, insbesondere zwischen etwa 520 nm und 560 nm.

Das Pflanzenwachstum kann deshalb erheblich gefördert werden, wenn es gelingt, selektiv den grünen Bereich auszukoppeln und anschließend weiter zu behandeln.

Der Spektralbereichsfilter ist bevorzugt für Licht bis etwa 500 nm transparent. Das Licht in diesem Bereich ist nach den Erkenntnissen des Erfinders sehr nützlich für das Pflanzenwachstum. Gleiches gilt für Licht ab etwa 580 nm.

Bevorzugt ist die Filtereinrichtung dazu eingerichtet, das filterreflektierte Licht einem phase-shifting zu unterwerfen.

Wenn ein phase-shifting-Prozess vorgesehen ist, wird es möglich, das filterreflektierte Licht in denjenigen Bereich des PAR-Spektrums zu verschieben, welcher für das Pflanzenwachstum von größerem Nutzen ist. So wird insbesondere vorgeschlagen, das filterreflektierte Licht im phase-shifting-Prozess, typischerweise einem Fluoreszenzprozess, in rot-gelbes Licht umzuwandeln. Dieses wird bevorzugt nach dem phase-shifting ebenfalls dem Pflanzbereich zugeleitet.

Das phase-shifting führt bevorzugt zu Licht von mehr als 600 nm, insbesondere von mehr als 680 nm.

Eine besondere Eignung hat die Filtereinrichtung, wenn das einfallende Licht eine Sammeloptik durchläuft und der Spektralbereichsreflektor schräg zu eine optischen Achse der Sammeloptik angeordnet ist, insbesondere unter einem Winkel von etwa 40° bis etwa 50°.

Bei einer solchen Konstellation wird es möglich, das vom Spektralbereichsreflektor filterreflektierte Licht allein durch die Schrägstellung des Spektralbereichsreflektors aus dem übrigen Strahlengang hinaus zu lenken, sodass insbesondere der Sekundärreflektor außerhalb des übrigen Strahlengangs angeordnet sein kann. Dies erhöht nicht nur die Freiheit beim Anordnen der einzelnen Elemente im Gewächshaus, sondern hält auch den Hauptstrahlengang möglichst frei, sodass die Energie des Lichts möglichst ungemindert genutzt werden kann.

Der Spektralbereichsreflektor kann insbesondere zwischen der Sammeloptik und deren Fokus angeordnet seien. Dies führt zu einer dreifachen Optik aus Sammeloptik, Spektralbereichsreflektor und Sekundärreflektor, wobei im Lichtlaufweg erst jenseits des Spektralbereichsreflektors der Brennpunkt der Sammeloptik liegt, sodass dort ein Absorber angeordnet sein kann, beispielsweise wie vorstehend in dieser Patentanmeldung beschrieben in Form eines Fluidfilters in einem Rohr, in einem Zylinder oder in einer Kugel.

Der Spektralbereichsreflektor weist bevorzugt einen Sekundärfokus für das filterreflektierte Licht auf. Bei einer solchen Ausbildung des Spektralbereichsreflektors kann die Weiterbehandlung des filterreflektierten Lichts mit einer konstruktiv recht kompakt gehaltenen Anordnung bewirkt werden. Der Sekundärreflektor weist bevorzugt auf seiner vom Spektralbereichsreflektor beleuchteten Seite eine rote und/oder gelbe Beschichtung auf, insbesondere mit einem Fluoreszenzfarbstoff.

So sei insbesondere an eine Filtereinrichtung gedacht, bei welcher zunächst unterhalb einer Sammeloptik ein Filter vorgesehen ist, welcher als Spektralbereichsreflektor dient, indem er bis 500 nm transparent ist, zwischen 500 nm und 580 nm reflektiert und über 580 nm wiederum transparent ist. Dieser kann unter einer Neigung zur optischen Achse vor der Brennebene der Sammeloptik so installiert sein, dass sich sein Sekundärfokus aus grünem Licht außerhalb des Primärstrahlenbündels bildet, während das übrige Licht durch den Filter hindurch auf ein Absorberrohr mit Filterflüssigkeit fällt. Bei Versuchen des Erfinders hat sich beispielsweise ein unter 45° geneigter Dichroidfilter als sehr geeignet herausgestellt.

Im Bereich des Sekundärfokus' für das grüne Licht kann eine beispielsweise horizontal hängende Platte angeordnet sein, deren Unterseite nun grün beleuchtet wird, wobei diese beispielsweise mit dem Fluoreszenzfarbstoff TeS-Flammrot beschichtet ist. Dies führt dazu, dass die Platte das grüne Licht in das gewünschte rot-gelbe Licht umwandelt. Dieses wird anschließend als Lambert-Strahlung auf verbesserte Weise in den Pflanzenraum gesendet.

Im filterreflektierten Licht ist bevorzugt ein Konverter angeordnet, insbesondere eine Solarzelle.

So ist es beispielsweise denkbar, unterhalb der Platte, welche als Sekundärreflektor dient, eine für grünes Licht besonders effiziente Solarzelle oder einen anderen geeigneten Konverter für grünes Licht anzuordnen, sodass zusätzlicher elektrischer Strom erzeugt werden kann oder andere gewünschte Wirkungen erzielt werden können, zum Beispiel photochemische Reaktionen.

Mit der geschilderten Anordnung wird es möglich, den für die Photosynthese praktisch unwirksamen Spektralbereich ohne Beeinträchtigung der anderen Spektralbereiche selektiv so herauszufiltern, dass der Pflanze mehr bevorzugtes Licht zugeführt wird als unter normalen Bedingungen möglich. Dies führt zu einer beträchtlichen Steigerung der Pflanzenproduktivität.

Herkömmlich ist es bekannt, in eine transparente Treibhaushülle Fluoreszenzpigmente einzubringen. Dies hat bei einem Versuch in Israel zu etwa 20 % gesteigerter Produktivität von Tomatenpflanzen geführt. Allerdings ist dabei in Kauf zu nehmen, dass auch die für die Pflanze geeigneten Spektralbereiche geschwächt werden. Überdies wird zum Behandeln der Hülle recht viel des teuren Fluoreszenzfarbstoffs benötigt. Zusätzlich kann bei einem altersbedingten Nachlassen der Wirkung der Fluoreszenzfarbstoffe nur die Gesamthülle des Treibhauses ausgetauscht werden, was sehr teuer ist. Das vorstehend beschriebene System schafft es demgegenüber, selbst bei einem altersbedingten Nachlassen der gewünschten Wirkungen nur eine kleine Fläche des rot-gelb-Strahlers neu beschichten zu müssen.

Unterstützend löst die gestellte Aufgabe eine Beleuchtungseinrichtung für ein Gewächshaus mit einem Lichtspeicherfluid.

Es ist bekannt, phosphoreszierende Partikel in Suspension in geeignete Flüssigkeiten einzubringen, diese in durchsichtigen Sonnenkollektoren vom Sonnenlicht anregen zu lassen und das in der Flüssigkeit gespeicherte Licht entweder direkt in dunkle Räume oder in Flüssigkeitsspeicher zu bringen, aus denen es bei Bedarf wieder in Räume geleitet wird und diese beleuchten kann.

Auch ist es bekannt, Gewächshäuser nachts mit elektrischem Strom zu beleuchten, da sich bei Versuchen gezeigt hat, dass eine Pflanze effektiver wächst, wenn sie in gewissen Perioden auch nachts Licht erhält.

Die Verwendung eines Lichtspeicherfluids für eine Beleuchtungseinrichtung für ein Gewächshaus ist demgegenüber nicht bekannt. Lichtspeicherfluide speichern die vom Licht übertragene Energie ausschließlich in für das Pflanzenwachstum unattraktiven Spektralbereichen. Der Erfinder hat jedoch erkannt, dass selbst die Speicherung des an sich für das Pflanzenwachstum nicht sinnvollen Lichts sinnvoll eingesetzt werden kann.

Es wird vorgeschlagen, dass das Lichtspeicherfluid phosphoreszierend ist. Phosphoreszierende Partikel sind weitgehend bekannt. Bei Versuchen des Erfinders hat sich herausgestellt, dass Phosphoreszenzpartikel in Kombination mit Silikonölen und/oder Fluorflüssigkeiten besonders geeignet sind, da bei diesen eine Halbwertzeit der Leuchtkraft von teilweise über 20 Stunden erreicht werden kann. Diese leuchten zwar im grünen Spektralbereich des Lichts, können aber dennoch erfolgreich zum Pflanzenwachstum eingesetzt werden.

Bevorzugt ist ein Speichertank für das Lichtspeicherfluid vorgesehen. Aus diesem kann das Lichtspeicherfluid bei Bedarf entnommen werden, insbesondere während der Nachtzeiten.

Es wird vorgeschlagen, dass ein Lichtemitter in einem Pflanzraum vorgesehen ist, welcher das Lichtspeicherfluid in den Pflanzraum emittieren kann. Mit einem solchen Lichtemitter kann den Pflanzen das gespeicherte Licht gezielt zugeführt werden.

Bevorzugt ist dem Lichtemitter ein rot-gelb-Lichtwandler zugeordnet, welcher aus vom Lichtspeicherfluid emittiertem grünen Licht rot-gelbes Licht erzeugt und dieses zu den Pflanzen strahlt.

Es wurde bereits erläutert, dass besonders effektive Lichtspeicherfluide im grünen Spektralbereich des Lichts abstrahlen. Wenn jedoch ein rot-gelb-Lichtwandler vorgesehen ist, kann das grüne Licht in solches umgewandelt werden, welches zum Pflanzenwachstum erheblich beiträgt. Der rot-gelb-Lichtwandler kann permanent im Pflanzraum verbleiben. Alternativ ist es denkbar, ihn nur während der Speisung des leuchtenden Speicherfluids zwischen den Pflanzen anzuordnen.

Der Lichtemitter weist bevorzugt vertikale Doppelplatten auf. Doppelplatten sind kostengünstig zu konstruieren und können auf ihrer Innenseite mit dem Lichtspeicherfluid gespeist werden. Außerdem können Doppelplatten platzsparend zwischen Bepflanzungsreihen angeordnet werden.

Insbesondere ist ein System wie folgt denkbar: ein Lichtfilter ist vorgesehen, welcher beispielsweise als Dichroidfilter ausgebildet ist und blaues Licht mit einer Wellenlänge kleiner als 500 nm auf ein durchsichtiges Rohr fokussiert. Dies kann wie vorstehend beschrieben bevorzugt über einen schrägstehenden Spektralbereichsreflektor erfolgen, welcher blaues Licht mit Wellenlängen unter 500 nm zu diesem Rohr filterreflektiert und es bevorzugt dorthin bündelt. In dem transparenten Rohr sind in einer geeigneten Trägerflüssigkeit Phosphoreszenzpartikel angeordnet, welche vom blauen Licht zu grünem Leuchten angeregt werden. Die Flüssigkeit mit den grün leuchtenden Phosphoreszenzpartikeln wird in einen Fluidspeicher gepumpt.

Nachts wird diese Flüssigkeit aus dem Speichertank in Doppelplatten gepumpt, die im Pflanzraum zwischen den Pflanzreihen stehen. Rechts und links dieser durchfließbaren Doppelplatten sind dünne Platten aufgestellt, welche mit Fluoreszenzfarbstoffen beschichtet sind, die das grüne Licht in rot-gelbes Licht umwandeln und dieses den in ihrer Umgebung stehenden Pflanzen zustrahlen.

Die geschilderte direkte Speicherung des Tageslichts als flüssiges Licht ist eine absolute Neuheit, die wesentlich wirtschaftlicher als die bisherige Beleuchtung über elektrisches Licht in Treibhäusern ist.

Unterstützend löst die gestellte Aufgabe eine Leiteinrichtung zum Leiten von einfallendem Licht für ein Gewächshaus, wobei im Lichtlaufweg zunächst eine Sammeloptik angeordnet ist, dann eine Streuoptik und anschließend ein Prisma.

Prismen als solche sind bekannt. Ein Glasprisma ist ein optisches System, welches bei parallel eingeleiteten Lichtstrahlen des weißen Sonnenlichts dieses in ein Regenbogenspektrum zerlegt. Der vorliegende Erfindungsgedanke sieht im Wesentlichen vor, dieses bekannte Prinzip dadurch zu erweitern, dass das Licht vor dem Einleiten in das Prisma zunächst konzentriert und dann parallelisiert wird. Dies ermöglicht es, die Energie des Sonnenlichts zu bündeln und mit räumlich begrenzten und somit kostengünstigen Mitteln ein Prisma zum Zerlegen des konzentrierten Lichts vorzusehen. Im Ergebnis erhält man konzentriertes Licht, aufgeteilt in die Spektralanteile. Dieses kann anschließend gezielt abgegriffen und weiter behandelt werden.

Die Sammeloptik ist bevorzugt Teil einer Gewächshaushülle.

Es wird vorgeschlagen, dass die Streuoptik im Lichtlaufweg kurz vor einem Fokus der Sammeloptik angeordnet ist. Die Sammeloptik bündelt das einfallende Sonnenlicht hin zu ihrem Fokus. Kurz vor und kurz nach dem Fokus hat der Strahlengang des Lichts daher nur eine geringe Breite, sodass eine relativ kleine, der Breite entsprechende Streuoptik vorgesehen werden kann. Wenn die Streuoptik vor dem Fokus liegt, kann Bauraum eingespart werden. Selbstverständlich ist es auch möglich, die Streuoptik jenseits des Fokus' anzuordnen.

Bevorzugt parallelisiert die Streuoptik das Licht ideal, wobei auch bei einer Strahlengangabweichung von höchstens 10° oder von höchstens 30° noch eine hinreichende Parallelisierung vorliegen kann.

Insbesondere ist ein System wie folgt denkbar:
Eine punktförmig abbildende Linse in der Gewächshaushülle konzentriert das einfallende Tageslicht mittels der geschilderten Optik hin zu einem Glasprisma, welches das hochkonzentrierte Licht in Streifen des Regenbogenspektrums zerlegt, in welchem das farbige Licht ebenfalls in hochkonzentrierter Form vorliegt. Prismen benötigen zur Lichtzerlegung auf ihrer Eintrittsseite paralleles Licht. Da die Konzentratorlinse der Sammeloptik ein konvergierendes Strahlenbündel liefert, muss dieses im Bereich kurz vor oder nach dem Fokus parallelisiert werden. Dies geschieht bevorzugt mit einer doppelkonkaven Linse, deren negative Brennweite der positiven Brennweite der primären Sammeloptik entspricht.

Das konzentrierte Regenbogenlicht kann anschließend für die verschiedensten Zwecke genutzt werden. Beispielsweise können das rote und das blaue Licht, zwei Bereiche des PAR-Sektrums, ohne Weiteres auf die Pflanzen geleitet werden, während das grüne Licht eine Konzentratorsolarzelle trifft. Es kann auch beispielsweise in rot-gelbes Licht für eine optimale Pflanzenbeleuchtung umgewandelt werden. Dies wurde vorstehend bereits beschrieben.

Da in der Regel die Intensitäten in den konzentrierten Farbstrahlbündeln für die Pflanzen zu hoch sind, kann im Strahlengang zunächst ein Flüssigkeitsfilter vorgesehen sein, welcher zusätzliche Wärme erzeugt.

Zur besonders effizienten Umwandlung des Lichts in Strom können in die jeweiligen Farbbänder entsprechende Halbleiter gelegt werden, deren effektiver Bandabstand der Farbe des jeweiligen Lichts angepasst ist.

Herkömmliche Solarzellen haben für die Beleuchtung mit weißem Mischlicht senkrecht aufeinander aufbauende Schichten für die verschiedenen Spektralbereiche. Bei Anwendung der hier vorgeschlagenen Technik können die verschiedenen Halbleiterschichten für die verschiedenen Spektralbereiche nebeneinander angeordnet werden, insbesondere in einer Ebene. Dies verhindert nicht nur Lichtverluste in den herkömmlich übereinanderliegenden Schichten, sondern führt auch zu einem kostengünstigeren Aufbau.

Die vorgeschlagene Lichtleiteinrichtung ermöglicht die Zerlegung des Lichts in Spektralbereiche hochkonzentrierter Farbe schlicht durch die Verwendung und sinnvolle Kombination bekannter optischer Systeme, nämlich einer primären Konzentratoroptik, beispielsweise einer Fresnellinse, einer Doppelkonkavlinse zum Parallelisieren und eines Prismas. Optische Beschichtungen oder ähnliche kostenträchtige Einrichtungen sind nicht erforderlich.

Unterstützend löst die gestellte Aufgabe die Verwendung von Fluorpolymer als Werkstoff für eine Sammellinse, insbesondere für eine Fresnellinse, für eine Unterhängfolie unter einer Sammeloptik eines Gewächshauses, für einen Wärmetauscher und/oder für eine transparente Wärmedämmung.

Vorstehend wurde anhand der Gewächshaushülle bereits erwähnt, welche Vorteile in der Verwendung von Fluorpolymeren als Werkstoff liegen. Dies sind insbesondere eine sehr hohe Transparenz im für Gewächshäuser wichtigen UVA-Bereich, eine hohe mechanische und thermische Stabilität, chemische Inertheit und Selbstreinigung in Folge geringer Oberflächenhaftung.

Solche Eigenschaften sind für eine Fresnellinse oder generell für eine Sammeloptik von großer Bedeutung. Gegenwärtig werden Sammellinsen nahezu ausschließlich aus PMMA gefertigt. Nach Versuchen des Erfinders lassen sich Sammeloptiken, konkret Sammellinsen, jedoch auch aus Fluorpolymerfolie herstellen. Gegenüber PMMA-Linsen sind diese erheblich langzeitstabiler. Außerdem kann das UVA-Licht im Diffusanteil direkt zu den Pflanzen vordringen, was für den Geschmack von Früchten oder Gemüse, für die Farbe und für die natürliche Entkeimung von großer Bedeutung ist. Das direkte UV-Licht wird gebündelt, kann über Selektivfilter umgekoppelt werden und entweder zusätzlich in den Pflanzenraum gestrahlt werden oder für spezielle Aufgaben genutzt werden, beispielsweise Trinkwasserentkeimung, spezielle photochemische Reaktionen o.ä..

Die gleichen Vorteile lassen sich bei einer Unterhängfolie unter den Linsen erreichen, wie sie beispielsweise bei den kissenförmigen Gewächshaushüllemodulen aus der DE 199 82 011 bekannt ist. Auch für einen Wärmetauscher wie nachstehend in dieser Anmeldung beschrieben lässt sich der Werkstoff hervorragend einsetzen.

Außerdem werden in Gewächshäusern oft transparente Wärmedämmungen auf der Unterhängfolie unter den Sammellinsen angeordnet. Eine transparente Wärmedämmung schafft ein konstanteres Klima im Gewächshaus bei gleichzeitiger UVA-Transmission. Auch kann eine solche transparente Wärmedämmung am Abluftkamin eingesetzt werden. Dieser wird später im Rahmen dieser Patentanmeldung erläutert.

Ein Gewächshaus mit einer Fluorpolymerfolienabdeckung hat hervorragende Eigenschaften in Bezug auf das Pflanzenwachstum, die natürliche Entkeimung und eine lange Lebensdauer. Wenn die Fluorpolymerfolie nicht nur für die Außenhülle verwendet wird, sondern auch für Bauteile innerhalb des Gewächshauses, lassen sich technische Synergieeffekte erreichen. Auch lässt sich der Werkstoff kostengünstiger im Einkauf beschaffen, und es muss weniger Lagerraum für Ersatzfolie oder Ersatzwerkstoffe bereitgestellt werden.

Unterstützend löst die gestellte Aufgabe ein Gewächshaus mit einem Aufwindkamin.

Ein solarer Aufwindkamin kann die Luftzirkulation im Treibhaus periodisch oder kontinuierlich ohne Fremdenergie gewährleisten. Herkömmliche Treibhäuser öffnen demgegenüber Lüftungsklappen im Treibhaus unter Verwendung zusätzlicher Ventilatoren.

Das Treibhaus kann mit einem Aufwindkamin bis auf den Luftaustrittsquerschnitt und einen Lufteinsaugquerschnitt hermetisch geschlossen gehalten werden. Diese gut definierten Ein- und Austrittsöffnungen, also der Lufteinsaugquerschnitt und der Luftaustrittsquerschnitt, können dauerhaft über Perioden oder die gesamte Zeit geöffnet bleiben, wobei sie mit einem engmaschigen Gitter vor Tieren geschützt sein sollten, beispielsweise mit einem Fliegengitter. Es ist bekannt, dass beispielsweise die weiße Fruchtfliege große Teile der Tomatenernte vernichten kann.

In herkömmlichen Treibhäusern ist das Schließen mit Gittern aufgrund schlecht zugänglicher, großer beweglicher Lüftungsklappen sehr teuer und nicht immer betriebssicher zu gewährleisten.

Bevorzugt ist ein Unterbodenkanalsystem zum Ansaugen von Luft vorgesehen. Über ein solches kann die Luft im Sommer vorgekühlt werden bzw. im Winter vorgewärmt werden.

Es wird vorgeschlagen, eine Luftbefeuchtung für die angesaugte Luft vorzusehen. Dies kann beispielsweise in einem Unterbodenkanal geschehen, wenn ein solcher vorhanden ist. Bevorzugt wird Wassernebel in die eingesaugte Luft eingesprüht. Das verdunstende Wasser kann eine adiabate Kühlung des Treibhauses bewirken.

Bevorzugt ist oben oder unten im Aufwindkamin ein Wasser-Luft-Wärmetauscher vorgesehen.

Bei herkömmlichen Treibhäusern geht Wasser, welches zur adiabaten Kühlung eingesetzt wird, verloren. Dies ist eines der wesentlichen logistischen und ökonomischen Probleme von Gewächshäusern in heißen Erdzonen. Mit einem Wasser-Luft-Wärmetauscher, insbesondere mit einem Gegenstromwärmetauscher, kann dieses Problem verhindert werden. Der Wärmetauscher sollte das verbindende Glied zwischen der Luft im Gewäschshausinnerem und der durch solare Erwärmung aufsteigenden Luftsäule im Aufwindkamin sein. Die aufsteigende Luftsäule erzeugt einen Unterdruck, der die feuchte Treibhausinnenluft durch die Luftkanäle des Gegenstromwärmetauschers zieht.

Wenn der Wasser-Luft-Wärmetauscher Wasserrücklaufmittel aufweist, kann das Wasser zumindest weitestgehend gehindert werden, das Treibhaus durch den Aufwindkamin zu verlassen. So kann in einer besonders einfachen Ausführung der Wärmetauscher gegenüber der Horizontalen geneigt angeordnet sein, während in Gegenstromkanälen Wasser zirkuliert, dessen Temperatur unterhalb der Temperatur der feuchten Luft liegt. Dies führt dazu, dass der Wasserinhalt der Luft auskondensiert und am unteren Ende des Gegenstromwärmetauschers rückgewonnen werden kann.

Bei diesem Prozess wird automatisch Wärmeenergie aus der Luft in das Wasser eingetragen und kann somit anderweitig genutzt werden. Der geschilderte Gegenstrom-Wärmetauscher stellt somit einen kombinierten Wasser-Wärme-Rekuperator dar.

Grundsätzlich kann die adiabate Kühlung des Gewächshauses auch durch Verdunsten von Salzwasser oder Brauchwasser erreicht werden. In diesem Falle erfüllt der Gegenstrom-Wärmetauscher die Zusatzfunktion einer Süßwassergewinnung.

Der dynamisch antreibende Teil des vorstehenden Systems ist die aufsteigende Heißluftsäule im Kamin. Um diesen Effekt zu optimieren, wird vorgeschlagen, dass der Aufwindkamin eine Verdunkelung aufweist, insbesondere zum Teil, und bevorzugt abgedeckt durch eine Wärmedämmung. Insbesondere wird vorgeschlagen, die sonnenbeschienene Halbseite des Kamins zu schwärzen und stirnseitig mit einer transparenten Wärmedämmung zu versehen.

Die im Schatten liegende Halbseite weist bevorzugt eine Hellfärbung oder eine Verspiegelung auf, insbesondere zum Teil, und bevorzugt abgedeckt durch eine Wärmedämmung. Eine helle oder spiegelnde Ausführung bewirkt eine geringe Wärmeemission.

Es wird vorgeschlagen, eine Regulierungseinrichtung für den Luftmassestrom in einem Ansaugkanal des Gewächshauses vorzusehen. Auf diese Weise kann die heiße Luftsäule im Aufwindkamin ihren Auftrieb ohne störenden Eingriff permanent aufrecht erhalten.

Der Aufwindkamin erfüllt die geschilderten Funktionen ohne fossile oder elektrische Hilfsenergie und ist insbesondere in Verbindung mit dem Wasser-Wärme-Rekuperator besonders vorteilhaft einzusetzen.

Zur Kühlung des Wassers im Gegenstromwärmetauscher sind insbesondere zwei unterschiedliche Verfahren von besonderem Vorteil:
Zum einen ist denkbar, einen Teilbereich der Fläche um das Treibhaus herum tagsüber mittels klappbarer Spiegellamellen (oder einer aufrollbaren Spiegelfolie oder ähnlichem) vor dem Sonnenlicht zu schützen. Dies verhindert, dass sich der darunter liegende Boden oder Sand durch Strahlung aufwärmt.

Nachts wird der Reflektor verlagert, sodass die Wärme des Bodens in den kalten Nachthimmel abstrahlt. Dies funktioniert nach Versuchen des Erfinders vor allem in ariden und semiariden Gebieten mit klaren Nachthimmel besonders gut. Bei einem Prototypen hat der Erfinder Abstrahlleistungen von bis zu etwa 100 W/m² ermitteln können.

Ein Unterbodenregister von wasserdurchströmten Rohren kann auf diese Weise für die angestrebte Senkung der Temperatur im Gegenstromwärmetauscher unter den Taupunkt sorgen.

Alternativ ist denkbar, dass ein Wasserrohrregister bis in eine gewissen Tiefe in die Erde geführt wird und dort das Wasser auf die benötigte Temperatur gekühlt wird.

Die erste vorgestellte Alternative ist jedoch nach gegenwärtiger Einschätzung des Erfinders zu bevorzugen, da in den Nächten regelmäßig mit einer ausreichenden Kühle gerechnet werden kann.

Unterstützend löst die gestellte Aufgabe ein Gewächshaus, bei welchem Wärmeabtragmittel vorgesehen sind, die Wärme von Photovoltaikzellen in ein Geothermieheizsystem und/oder in ein Fluidspeicherheizsystem austragen.

Das Prinzip der Kopplung eines Gewächshauses mit Erdwärme ist bekannt. Statt Erdwärme kann auch ein großer, gut wärmegedämmter Wasserspeicher verwendet werden, am besten ein sogenannter Hot-Lake, bei welchem die sonnenzugewandte Oberfläche zusätzlich aktiv Sonnenwärme gewinnt.

Der hier vorgeschlagene Aspekt der Erfindung beruht auf der Erkenntnis, dass die Abwärme aus dem Treibhaus (also insbesondere das Kühlwasser der Photovoltaikzellen) eine Wärmesenke braucht, also einen Wasserspeicher oder eine kühlere Erdschicht, diese aber dadurch thermisch auflädt und damit zur Heizung des Wärmespeichers aktiv beiträgt.

Unterstützend löst die gestellte Aufgabe eine Eintragvorrichtung zum Eintragen von Kohlendioxid in ein Gewächshaus, wobei Mittel zum Gewinnen von Kohlendioxid aus Calciumcarbonat vorgesehen sind.

Kohlendioxid wird auch herkömmlichen Treibhäusern zugeführt, um ein erhöhtes Pflanzenwachstum zu bewirken. Das Kohlendioxid wird teilweise aus Gasflaschen und teilweise aus Abgasen von Kraftwerken oder Motoren entnommen und von dort aus in die Treibhäuser geleitet.

Dieses Verfahren ist jedoch sehr aufwendig und teuer. Der Erfinder hat erkannt, dass Kalziumkarbonart demgegenüber günstiger zu besorgen zu lagern ist und dass Calciumcarbonat sein Kohlendioxid bereitwillig freigibt. Dieses Kohlendioxid kann zum Anregen des Pflanzenwachstums verwendet werden.

Bevorzugt weisen die Mittel zum Gewinnen von Kohlendioxid eine Brennoptik zum Brennen von Calciumcarbonat auf. Das Brennen von Calciumcarbonat ist Teil des sogenannten Kalkkreislaufs. Beispielsweise kann das Calciumcarbonat mittels eines Förderbands in den Brennpunkt eines Brennspiegels gebracht werden. Hier kann beispielsweise die Sonnenenergie zu einem Hohlraumreceiver auf einem Rüttelbett konzentriert werden und bei geeigneter Gestaltung und ausreichender Sonneneinstrahlung das Calciumcarbonat soweit erhitzen, dass der Kalk gebrannt wird. Hierbei entsteht unter Freisetzung von Kohlendioxid Branntkalk (CaO).

Das Beim Brennen freigesetzte Kohlendioxid wird in das Treibhaus geblasen, wo es die Pflanzen zu vermehrtem Wachstum anregt.

Bevorzugt ist eine Kreislaufförderung vorgesehen, die Branntkalk zur Außenluft zum dortigen Entziehen von freiem Kohlendioxid fördert. Wenn der Branntkalk der freien Atmosphäre ausgesetzt wird, bewirkt dies eine Reduzierung des Kohlendioxidgehalts der Atmosphäre.

Überdies wird der Branntkalk wieder zu Calciumcarbonat, so dass der Stoffkreislauf von neuem beginnen kann.

Auch kommt in Betracht, dass eine Kreislaufförderung vorgesehen ist, die gebrannten Kalk einer Löschung zuführt und anschließend weiter zur Außenluft zum dortigen Entziehen von freiem Kohlendioxid fördert. Wenn der gebrannte Kalk mit Wasser gelöscht wird, bildet sich Calciumhydrogencarbonat in einer stark exothermen Reaktion. Der gelöschte Kalk absorbiert anschließend abermals atmosphärisches Kohlendioxid und wird dadurch wieder zu Calciumcarbonat, so dass auch auf diese Weise der Kreislauf von Neuem beginnen kann.

Bevorzugt wird beim Kalklöschen überschießende Wärme einer thermodynamischen Maschine zugeführt. Die ohnehin beim Löschen entstehende Wärme kann auf diese Weise zum Betrieb einer Maschine dienen, beispielsweise mit einem Außenwärmetauscher, oder zur Beladung eines Wärmespeichers.

Mit dem vorgeschlagenen Verfahren wird Kohlendioxid mittels Sonnenenergie über den Kalkkreislauf aus der Atmosphäre entzogen und in Biomasse eingebaut. Zusätzlich entsteht nützliche Prozesswärme.

Unterstützend löst die gestellte Aufgabe die Verwendung von Bestandteilen von Pflanzen, die in einem Gewächshaus gewachsen sind, als Zuschlag in Bauelementen.

Insbesondere sei an Pflanzen gedacht, die unter Entziehung von Kohlendioxid aus der Atmosphäre gezüchtet werden.

Wird - beispielsweise wie vorstehend beschrieben - der Atmosphäre freies Kohlendioxid entzogen und in Biomasse eingebaut, so hängt die Dauer der Fixierung des Kohlendioxids von der Art der Biomassenutzung ab. Wird die Biomasse verzehrt, also beispielsweise die Gemüse oder Früchte gegessen, gelangt das Kohlendioxid über die Verdauungsvorgänge des Menschen oder des Tiers wieder vollständig in die Atmosphäre. Der gesamte Prozess ist also Kohlendioxid-neutral.

Es ist jedoch von Vorteil, wenn die Biomasse zumindest zum Teil nachhaltig in der Lage ist, das Kohlendioxid zu binden. Dies ist über eine gezielte Verwendung der Biomasse möglich. So kann man geeignete Pflanzenmaterialen, meist Pflanzenfasern, beispielsweise in langlebige Baumaterialien oder Strukturmaterialien einbauen. Denkbar sind vor allem pflanzenfaserverstärkte Lehmziegel oder pflanzenfaserverstärkte Leichtbaumaterialien für Autos, Flugzeuge usw.

Der Treibhauseffekt kann auf diese Weise nachhaltig reduziert werden. Gegenwärtig wird öffentlich meist darüber diskutiert, das Kohlendioxid aus Kraftwerken oder dem Verkehr in unterirdischen Kavernen oder im Meer zu lagern. Der vorgestellte Aspekt der Erfindung stellt demgegenüber eine aktive Methode vor, das Kohlendioxid der Atmosphäre zu entziehen und sinnvoll einzusetzen, wobei dies zusätzlich rein solar betrieben erfolgen kann, also ohne jegliche Emissionen.

Die vorgestellte Erfindung trägt insgesamt zu substantiellen Effekten zum Bremsen oder Verhindern der sich weltweit anbahnenden Klimaveränderung bei.

Die Erfindung wird nachstehend unter Bezugnahme auf die Zeichnung näher erläutert. Dort zeigen
- Figur 1: eine gleichzeitige Darstellung des terrestrischen Solarspektrums und der photosynthetisch aktiven Einstrahlung (PAR),
- Figur 2: schematisch einen Grünlichtfilter,
- Figur 3: in einem Diagramm die Reflexionscharakteristik des Grünlichtfilters aus Figur 2,
- Figur 4: in einem Diagramm die Reflexionscharakteristik von Flammrot,
- Figur 5: schematisch ein System zur Lichtspeicherung in einem Gewächshaus,
- Figur 6: schematisch ein Gewächshaus mit einer Kaminlüftung,
- Figur 7: schematische eine Kältesenke mit einem aktiv gekühlten Stück Land,
- Figur 8: schematisch die Wärmeabstrahlung des aktiv gekühlten Stücks Land aus Figur 7 bei Nacht,
- Figur 9: schematisch einen Hot-Lake und
- Figur 10: schematisch einen Kalkkreislauf für ein Gewächshaus.

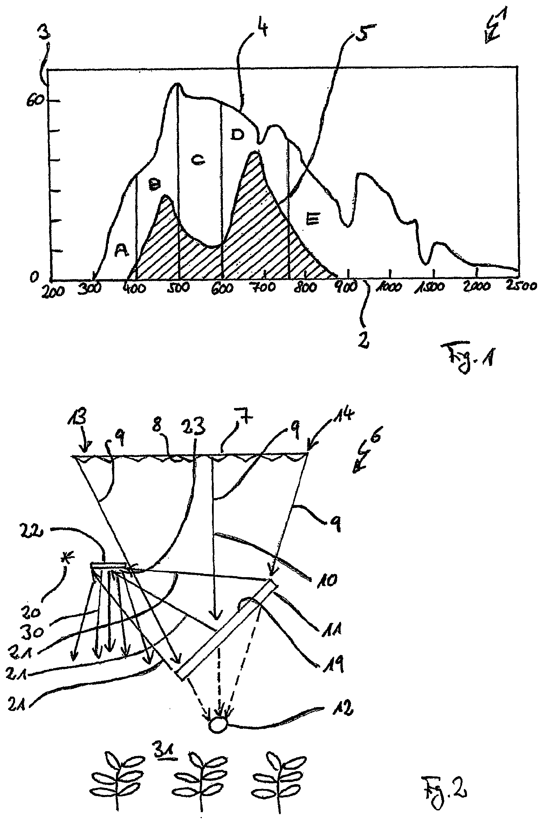

Das Diagramm 1 in Figur 1 zeigt auf seiner Abszisse 2 die Wellenlänge des Lichts in nm. Auf der Ordinate 3 ist die Intensität der jeweiligen Wellenlänge angetragen.

Eine erste Kurve 4 beschreibt anhand von Messdaten das terrestrische Solarspektrum. Eine zweite Kurve 5 zeigt die photosynthetisch aktive Strahlung PAR.

Gleichzeitig ist das Solarspektrum in Abschnitte A, B, C, D und E aufgeteilt. Im Bereich A herrscht UV-A-Strahlung. Diese hat keine Wirkung auf das Pflanzenwachstum, ist jedoch verantwortlich für intensivere Farben, stärkeres Aroma und eine natürliche Entkeimung.

In den Spektralbereichen B und D ist der wirksamste Anteil des Spektrums für die Photosynthese der Pflanzen zu finden.

Die Strahlung in den Breichen C und E leistet nur einen kleinen Betrag zur Photosynthese.

Die Tatsache, dass das Sonnenlicht nur zum Teil sinnvoll für das Pflanzenwachstum nutzbar ist, nutzt die Anlage 6 in einem Treibhaus (nicht im ganzen dargestellt) in Figur 2.

Eine Gehäusehülle 7 besteht aus modular aneinandergesetzten Sammeloptiken 8 (exemplarisch gekennzeichnet), so dass die direkte Sonnenstrahlung gebündelt in das Treibhaus eingeleitet wird. Im Strahlengang eines konvergierenden Strahlenbündels 9 (exemplarisch gekennzeichnet) ist unter einem Winkel von etwa 45 ° zu einer optischen Achse 10 der als Sammeloptik dienenden Gehäusehülle 7 ein Flüssigkeitsfilter 11 angeordnet. Dieser wird von den Lichtstrahlen des Strahlenbündels 9 durchlaufen, bevor diese ihren Brennpunkt 12 erreichen. Die Größe des Fluidfilters 11 ist exakt so abgestimmt, dass auch die Strahlen aus Randbereichen 13, 14 auf den Fluidfilter 11 treffen.

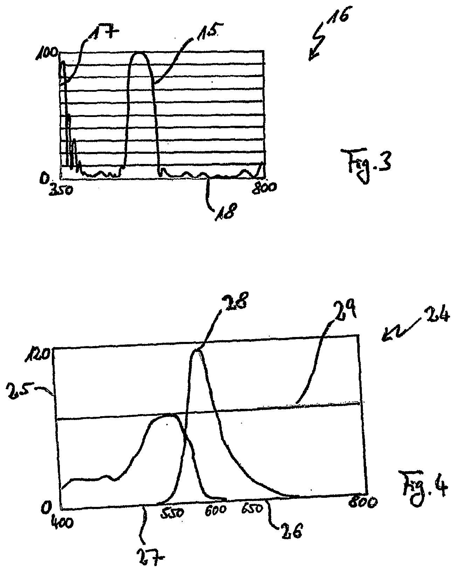

Der Fluidfilter 11 ist im Bereich zwischen etwa 400 nm und etwa 500 nm praktisch transparent, ebenso wie im Bereich über etwa 570 nm. Lediglich den Spektralbereich zwischen etwa 500 nm und etwa 570 nm reflektiert der Flüssigkeitsfilter 11 fast vollständig. Die Messkurve 15 in Figur 3 zeigt dies sehr deutlich. Das Diagramm 16 in Figur 3 zeigt die Reflexion des Lichts in Prozentpunkten auf der Ordinate 17 über der Wellenlänge des Lichts auf der Abszisse 18.

Der Fluidfilter 11 dient somit als Grünlichtreflektor.

Das reflektierte grüne Licht wird vom Fluidfilter 11 aufgrund der Konvergenz des Strahlenbündels 9 vor dem Fluidfilter 11 und dessen planer Oberfläche 19 zu einem Sekundärbrennpunkt 20 reflektiert. Somit entsteht ein Grünlichtbündel 21 (exemplarisch gekennzeichnet).

Das Grünlichtbündel 21 hat seinen Sekundärbrennpunkt 20 außerhalb des Strahlenbündels 9 des einfallenden Sonnenlichts. Somit ist es möglich, noch vor Erreichen des Sekundärbrennpunkts 20, aber außerhalb des Strahlenbündels 9, einen Sekundärreflektor 22 anzuordnen. Der Sekundärreflektor 22 ist eine etwa parallel zur Gewächshaushülle 7 aufgehängte Platte, deren Dimension wiederum auf die Breite des Grünlichtbündels 21 an dieser Stelle abgestimmt ist. Es ist mit Flammrot an einer Unterseite 23 beschichtet.

Die Reflexionscharakteristik von Flammrot ist im Diagramm 24 in Figur 4 anhand der relativen Fluoreszenzintensität (ohne Standard) auf der Ordinate 25 über der Wellenlänge des Lichts in nm auf der Abszisse 26 aufgetragen. Ein Fluoreszenz-Emissionsspektrum wird insbesondere bei einer Wellenlänge 27 von 510 nm angeregt. Ein Peak ist über einer Wellenlänge von etwa 590 nm zu finden. Ein Fluoreszenzanregungsspektrum 20 liegt etwa bei einer Intensität von 70 auf der Ordinate 25.

Durch die Reflexionseigenschaften des Fluidfilters 11 und der Flammrot-beschichteten Platte des Sekundärreflektors 22 wird ein Streulicht 30 (exemplarisch gekennzeichnet) in einen Pflanzraum 31 in Form von rot-gelbem Licht emittiert.

In den Pflanzraum 31 gelangen somit nicht nur das Diffuslicht des Tageslichts (denn dieses wird an der Gewächshaushülle 7 nicht zum Brennpunkt 12 fokussiert), sondern auch dasjenige Lichtspektrum, welches den Fluidfilter 11 passiert hat, und zusätzlich das rot-gelb geshiftete Licht 30 vom Sekundärreflektor.

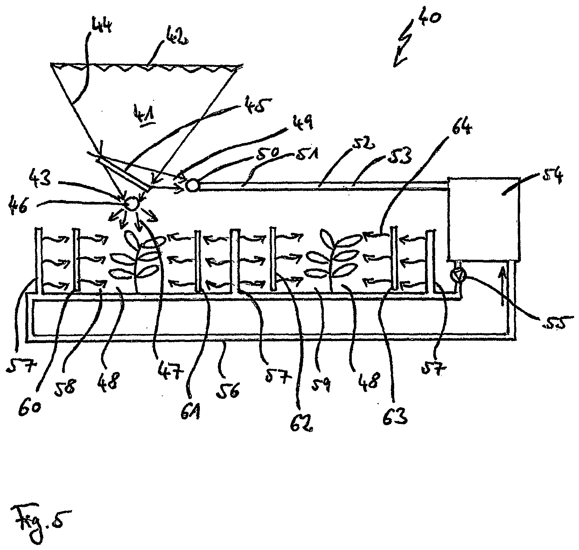

Im Gewächshaus 40 in Figur 5 ist in einer Lichteingangseinrichtung 41 das vorstehend beschriebene Prinzip weitgehend umgesetzt. Unter einer Gewächshaushülle 42, die aus modularen optischen Elementen zusammengesetzt ist, und in welchen ein optisches System einen Brennpunkt 43 der Sonne nachführen kann, oder welche so eingerichtet sind, dass sie das einfallende direkte Sonnenlicht permanent in einem Strahlenbündel 44 zum Brennpunkt 43 lenken können, ist ein Dichroidfilter 45 vorgesehen. Der Dichroidfilter 45 liegt im Strahlengang des Strahlenbündels 44 und noch vor dem Brennpunkt 43. Im Brennpunkt 43 ist ein Absorberrohr 46 angeordnet, welches den gewünschten Teil des Sonnenlichts in einer Streustrahlung 47 in einen Pflanzraum 48 lenkt.

Der Dichroidfilter 45 filterreflektiert blaues Licht 49 auf ein durchsichtiges Rohr 50, welches phosphoreszierende, grünleuchtende Pigmente 51 (exemplarisch gekennzeichnet) in einer Transportflüssigkeit 52 in einem Rohr 53 führt. Das Rohr 53 führt zu einem Speichertank 54, welcher somit in der Lage ist, über den Tag bzw. generell über die Zeitdauer der Sonnenbestrahlung stark grünleuchtendes Licht zu speichern.

Zu einem beliebigen Zeitpunkt insbesondere während der Nachtzeiten kann über eine Pumpe 55 das grünleuchtende Licht einem Lichtleuchtkreislauf 56 zugeführt werden. Der Lichtleuchtkreislauf 56 führt die grünleuchtende Flüssigkeit unter anderem durch drei Doppelplatten 57, welche im Pflanzraum 48 stehen und als langgestreckte, flache Körper unterschiedliche Pflanzreihen 58, 59 von einander trennen.

Zwischen jedem Doppelwandkörper 57, der am Kreislauf 56 angeschlossen ist, und den Pflanzreihen 58, 59 sind Fluoreszenzplatten 60, 61, 62, 63 angeordnet, so dass die Pflanzreihen 58, 59 nicht direkt vom grünleuchtenden, phosphoreszierenden Licht erreicht werden, sondern von rot-gelbem Licht 64 (exemplarisch gekennzeichnet). Dies erhöht das Pflanzenwachstum auch während der Nachtzeiten.

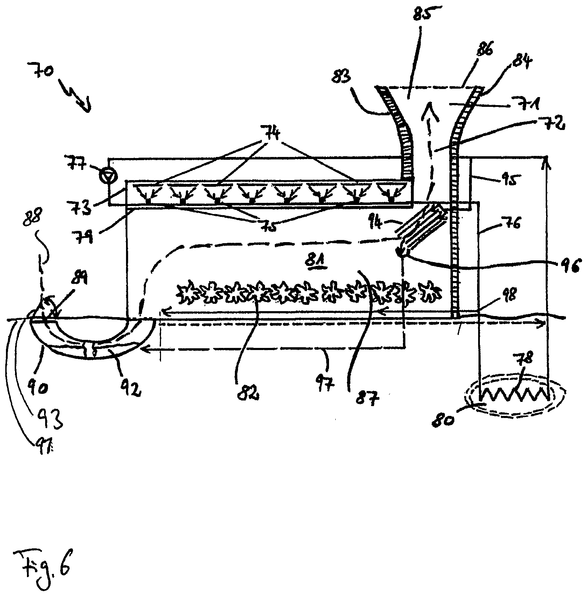

Das Treibhaus 70 in Figur 6 setzt einen Kamin 71 für eine Luftzirkulation 72 (schematisch gekennzeichnet) ein.

Unter einer äußeren Fluorpolymerhülle 73 mit einer Dicke zwischen 120 µm und 140 µm sind solare Optiken 74 (exemplarisch gekennzeichnet) angeordnet. Diese konzentrieren das direkte Licht auf photovoltaische und/oder thermische Receiver 75 (exemplarisch gekennzeichnet).

Über eine Heißwasserleitung 76 wird mit einer Pumpe 77 Kühlwasser von den thermischen Receivern 75 zu einem Erdwärmetauscher 78 gepumpt.

All dies geschieht noch oberhalb einer inneren Fluorpolymerhülle 79, welche eine Dicke von weniger als 50 µm hat.

Der Erdwärmetauscher 78 liegt in einem großen thermischen Erdspeicher 80. Dieser ist typischerweise für Sommer-Winter-Betrieb ausgelegt, er verwendet also die Sommersonne zur Winterheizung.

Um einen Innenraum 81 des Gewächshauses 70, in welchem Pflanzen 82 (exemplarisch gekennzeichnet) angeordnet sind, mit der Luftströmung 72 zu versorgen, ist der konvektive Luftkamin 71 an seiner zur Sonne gerichteten Seite geschwärzt und an seiner von der Sonne in deren Mittagsstand abgewandten Seite verspiegelt. Gleichzeitig ist eine Wärmedämmung 83, 84 an der Außenseite des Kamins 71 angebracht. All dies führt zu einer maximalen Aufheizung der Luft in einem Innenraum 85 des Kamins 71.

Somit entsteht ein permanenter, nach oben gerichteter Luftsog im Kamin 71, welcher an Strömungswiderstand nur ein feines Netz 86 gegen Schadinsekten zu überwinden hat.

Der vertikal nach oben steigende Luftsog sorgt für einen Unterdruck im Innenraum 81 des Gewächshauses 70, sodass die dortige Luft 87 nachgezogen wird und sodass diese wiederum Außenluft 88 durch einen Lufteintritt 89 in flache Erdkanäle 90 und durch diese in den Innenraum 81 nachzieht.

Die flachen Erdkanäle 90 haben eine Tiefe von beispielsweise 2 m bis 4 m unter einer Erdoberfläche 91 und haben eine großflächige Wasserfüllungsoberfläche 92, sodass die Luft auf ihrem Strömungsweg 72 in den Innenraum 82 des Gewächshauses 70 hinein befeuchtet wird und eine Verdunstungskühlung bewirken kann.

Zum Steuern des Luftstroms 72 ist eine Klappe 93 am Lufteinlass 89 vorgesehen, der ansonsten nur mit einem Insektenschutzgitter versehen ist.

Beim Hinausströmen der Luftströmung 72 aus dem Innenraum 81 des Gewächshauses 70 in den Kamin 71 hinein ist in den Weg des Luftstroms 72 ein Wasser-Wärme-Rekuperator 94 installiert. Dieser wird über eine Kühlwasserspeisung 95 mit kaltem Wasser aus dem Erdwärmetauscher 87 gekühlt, sodass sich aus der Innenraumluft 87 die Feuchtigkeit im Rekuperator 94 ausscheidet. Der Rekuperator 94 ist schräg installiert, sodass Wasserabläufe hin zu einem Wassersammler 96 führen. Vom Wassersammler 96 ist eine Rezirkulationsleitung 97 für das Kondenswasser eingerichtet, welche hin zu den Wasserflächen 92 in den flachen Erdkanälen 90 führt. Auf diese Weise geht dem Gesamtsystem dem Gewächshauses 70 das Kühlungswasser nicht mit der hinausströmenden Luftströmung 72 verloren.

An der Heißwasserleitung 76 zwischen den Photovoltaikzellen 75 und dem Erdwärmetauscher 78 ist eine Warmwasserentnahmeleitung 98 angeschlossen. Diese kann typischerweise dazu eingesetzt werden, beispielsweise etwa 30 °C warmes Wasser als Bodenheizung unter den Pflanzen 82 herzuleiten, um den Pflanzboden auch im Winter zu wärmen, beispielsweise auf ca. 20 °C.

Zwischen der äußeren Fluorpolymerhülle 73 und der inneren Fluorpolymerhülle 79 ist bevorzugt eine aktive Belüftung und Heizung des Zwischenraums vorgesehen. Dies verhindert eine Taupunktunterschreitung mit Tröpfchenkondensation mit negativem Einfluss auf die optische Transparenz der Hülle und auf das Pflanzenwachstum.

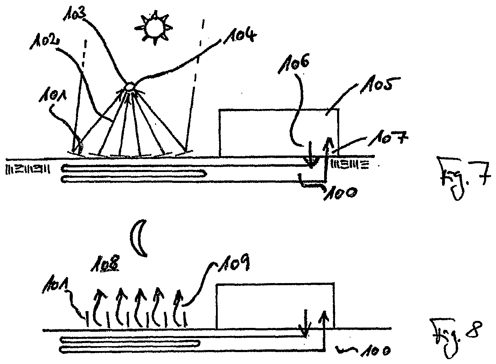

Das aktiv gekühlte Stück Land 100 in den Figuren 7 und 8 wird während der Bestrahlung mit Sonnenlicht (vgl. Figur 7) mit reflektierenden Abdeckungen 101 (exemplarisch gekennzeichnet) abgedeckt. Diese sind so ausgerichtet, dass das Sonnenlicht 102 (exemplarisch gekennzeichnet) zu einem Brennpunkt 103 reflektiert wird, welches oberhalb des Bodens liegt. Dort kann ein Rohr 104 vorhanden sein, welches einen Solarkollektor aufweist, um die reflektierte Energie zu nutzen.

Neben den Abdeckungen 101 ist ein Gewächshaus 105 angeordnet. Dieses ist über eine Wärmeabfuhr 106 mit dem Landstück 100 verbunden und führt in eine Kreislaufleitung (nicht dargestellt) im Landboden, welche unter den Abdeckungen 101 her verläuft. Sie führt anschließend zurück unter das Treibhaus 105 und dort über eine Einfließleitung 107 zurück in das Innere des Treibhauses 105 hinein.

Während der Nachtstunden (vgl. Figur 8) können die Abdeckungen 101 geöffnet werden, beispielsweise vertikal gestellt werden. In den klaren Nachhimmel 108 hinein, der gerade in ariden Gebieten relativ kühl ist, kann das tagsüber vom Treibhaus 105 erwärmte Stück Land 100 seine Wärme nun über Wärmestrahlung 109 abgeben.

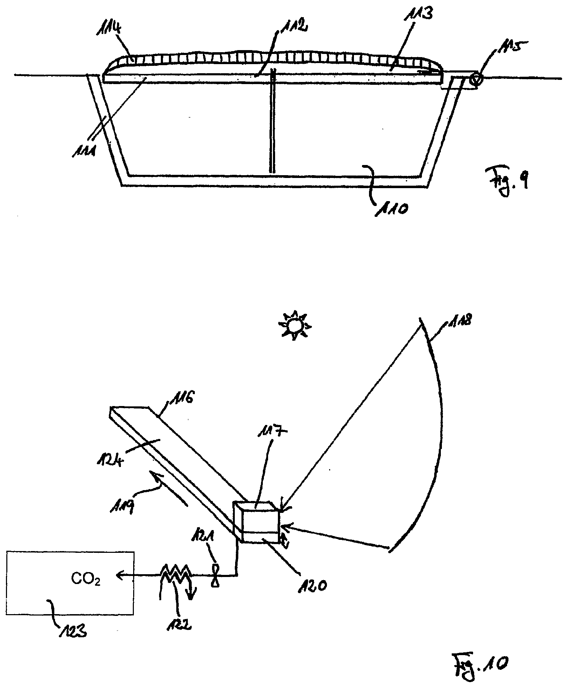

Der Hot-Lake 110 in Figur 9 ist rundum mit einer Wärmedämmung 111 versehen, beispielsweise aus aufgeschäumtem Glas. Auf einer oben schwimmenden Wärmedämmung 112 liegt ein Wasserbeutel 113 auf. Dieser ist mit einer transparenten Wärmedämmung 114 überdeckt.

Zwischen dem Wasser im Innenraum des Hot-Lake 110 und dem über der oberen schwimmenden Wärmedämmung 112 liegenden Wasserbeutel 113 ist eine Pumpe 115 vorgesehen, welche beliebig angesteuert werden kann.

Das Kalkkreislaufsystem in Figur 10 transportiert über ein Fließband 116 Calciumcarbonat (CaCO₃) in einen kastenförmigen Hohlraumreceiver 117, welcher im Brennpunkt eines fix-fokus-Spiegels 118 angeordnet ist und welcher auf einem senkrecht zur Bandlaufrichtung 119 rüttelnden Absorber-Rüttelkasten 120 angeordnet ist.

Im Hohlraum-Receiver 117 wird das Calciumcarbonat so sehr erhitzt, dass es gebrannt wird. Es können Temperaturen von über 1000 °C erreicht werden. Währenddessen wird das Calciumcarbonat gerüttelt, um seine Schüttung aufzulockern und um eine Wirbelschichtwärmeübertragung zu erreichen.

Während des Brennens wird Kohlendioxid (CO₂) aus dem Calciumcarbonat ausgeschieden. Dieses wird über ein Ansauggebläse 121 dem Prozess entzogen und durch einen Wärmetauscher 122 geleitet, um gegebenenfalls Wärme entziehen zu können. Der gegebenenfalls gekühlte Strom von Kohlendioxid wird sodann in ein Treibhaus 123 zum Mehren des Pflanzenwachstums geleitet.

Der gebrannte Kalk 124 wird vom Transportband 116 in die Transportrichtung 119 weitergeleitet, sodass er in den Freiraum gelangt und dort der Atmosphäre Kohlendioxid entzieht. Er kann anschließend wieder dem Kreislauf zugeführt werden und wird hierzu als Calciumcarbonat wieder dem Hohlraumreceiver 117 zugeführt.

## Patentansprüche

1. Filtereinrichtung zum Filtern von einfallendem Licht für ein Gewächshaus, wobei die Filtereinrichtung einen Spektralbereichsreflektor und einen Sekundärreflektor (22) aufweist, **dadurch gekennzeichnet, dass** der Spektralbereichsreflektor so eingerichtet ist, dass er einen Bereich des PAR-Spektrums zum Sekundärreflektor (22) filterreflektiert, wobei übriges Licht durch den Spektralbereichsreflektor zu einem Pflanzbereich passieren kann und filterreflektiertes Licht vom Sekundärreflektor (22) zum Pflanzbereich gelenkt wird.

2. Filtereinrichtung nach Anspruch 1, **dadurch gekennzeichnet, dass** der Spektralbereichsreflektor zumindest einen Teil des Spektrums zwischen etwa 500 nm und etwa 580 nm reflektiert, bevorzugt zumindest zwischen etwa 520 um und 560 nm.

3. Filtereinrichtung nach Anspruch 1 oder 2, **dadurch gekennzeichnet, dass** der Spektralbereichsfilter für Licht bis etwa 500 um transparent ist.

4. Filtereinrichtung nach einem der vorstehenden Ansprüche, **dadurch gekennzeichnet, dass** der Spektralbereichsfilter für Licht ab etwa 580 um transparent ist.

5. Filtereinrichtung nach einem der vorstehenden Ansprüche, **dadurch gekennzeichnet, dass** sie dazu eingerichtet ist, das filterreflektierte Licht einem phase-shifting zu unterwerfen.

6. Filtereinrichtung nach Anspruch 5, **dadurch gekennzeichnet, dass** das phase-shifting zu Licht von mehr als etwa 600 nm führt, bevorzugt von mehr als etwa 680 um.

7. Filtereinrichtung nach einem der vorstehenden Ansprüche, **dadurch gekennzeichnet, dass** das einfallende Licht eine Sammeloptik durchläuft und der Spektralbereichsreflektor schräg zu einer optischen Achse der Sammeloptik angeordnet ist, insbesondere unter einem Winkel von etwa 40° bis etwa 50°.

8. Filtereinrichtung nach Anspruch 7, **dadurch gekennzeichnet, dass** der Spektralbereichsreflektor zwischen der Sammeloptik und deren Fokus angeordnet ist.

9. Filtereinrichtung nach einem der vorstehenden Ansprüche, **dadurch gekennzeichnet, dass** der Spektralbereichsreflektor einen Sekundärfokus für das filterreflektierte Licht aufweist.

10. Filtereinrichtung nach einem der vorstehenden Ansprüche, **dadurch gekennzeichnet, dass** das den Spektralbereichsreflektor passierende Licht auf einen Absorber konzentriert ist.

11. Filtereinrichtung nach einem der vorstehenden Ansprüche, **dadurch gekennzeichnet, dass** der Sekundärreflektor auf seiner vom Spektralbereichsreflektor beleuchteten Seite eine rote und/oder gelbe Beschichtung aufweist, insbesondere mit einem Fluoreszenzfarbstoff.

12. Filtereinrichtung nach einem der vorstehenden Ansprüche, **dadurch gekennzeichnet, dass** im filterreflektierten Licht ein Konverter angeordnet ist, insbesondere eine Solarzelle.

13. Gewächshaus mit einer Filtereinrichtung nach einem der vorhergehenden Ansprüche, insbesondere mit einer Hülle, einer Beleuchtungs- und/oder einer Lichtleitereinrichtung, mit einem Aufwindkamin.

## Claims

1. Filter system for filtering incident light for a greenhouse, comprising a spectral range reflector and a secondary reflector (22), **characterized in that** the spectral range reflector is arranged such that it filters and reflects a range of the PAR spectrum to the secondary reflector (22), residual light being admitted through the spectral range reflector to a plant area and filtered and reflected light being directed from the secondary reflector (22) to the plant area.

2. Filter system according to Claim 1, **characterized in that** the spectral range reflector reflects at least part of the spectrum between about 500 nm and about 580 nm, preferably at least between about 520 nm and 560 nm.

3. Filter system according to Claim 1 or 2, **characterized in that** the spectral range filter for light is transparent up to about 500 nm.

4. Filter system according to one of the preceding Claims, **characterized in that** the spectral range filter is transparent for light from about 580 nm onwards.

5. Filter system according to one of the preceding Claims, **characterized in that** it is arranged to subject the filtered and reflected light to a phase-shifting.

6. Filter system according to Claim 5, **characterized in that** the phase-shifting leads to light of more than about 600 nm, preferably of more than about 680 nm.

7. Filter system according to one of the preceding Claims, **characterized in that** the incident light passes through a light-gathering optical system and the spectral range reflector is disposed at an incline with respect to an optical axis of the light-gathering optical system, in particular at an angle from about 40° to about 50°.

8. Filter system according to Claim 7, **characterized in that** the spectral range reflector is arranged between the light-gathering optical system and its focus.

9. Filter system according to one of the preceding Claims, **characterized in that** the spectral-range reflector has a secondary focus for the filtered and reflected light.

10. Filter system according to one of the preceding Claims, **characterized in that** the light passing through the spectral range reflector is concentrated onto an absorber.

11. Filter system according to one of the preceding Claims, **characterized in that** the secondary reflector has a red and/or a yellow coating, in particular with a fluorescent dye, on its side illuminated by the spectral range reflector.

12. Filter system according to one of the preceding Claims, **characterized in that** a converter, in particular a solar cell, is disposed in the filtered and reflected light.

13. Greenhouse having a filter system according to one of the preceding Claims, in particular having a shell, an illumination and/or an optical fiber unit, with an upwind chimney.

## Revendications

1. Dispositif de filtrage pour filtrer de la lumière incidente pour une serre, sachant que le dispositif de filtrage comporte un réflecteur de plage spectrale et un réflecteur secondaire (22), **caractérisé en ce que** le réflecteur de plage spectrale est agencé de telle manière qu'il réfléchit par filtrage une plage du spectre RAP (à rayonnement actif photosynthétique) vers le réflecteur secondaire (22), sachant que la lumière restante peut passer par le réflecteur de plage spectrale vers une zone végétale et la lumière réfléchie par filtrage est dirigée par le réflecteur secondaire (22) vers la zone végétale.

2. Dispositif de filtrage selon la revendication 1, **caractérisé en ce que** le réflecteur de plage spectrale réfléchit au moins une partie du spectre entre 500 nm et environ 580 nm, de préférence au moins entre environ 520 nm et 560 nm.

3. Dispositif de filtrage selon la revendication 1 ou 2, **caractérisé en ce que** le réflecteur de plage spectrale pour la lumière est transparent jusqu'à environ 500 nm.

4. Dispositif de filtrage selon l'une quelconque des revendications précédentes, **caractérisé en ce que** le réflecteur de plage spectrale pour la lumière est transparent à partir d'environ 580 nm.

5. Dispositif de filtrage selon l'une quelconque des revendications précédentes, **caractérisé en ce qu'**il est agencé pour soumettre la lumière réfléchie par filtrage à un déphasage.

6. Dispositif de filtrage selon la revendication 5, **caractérisé en ce que** le déphasage par rapport à la lumière est de plus de 600 nm environ, de préférence de plus de 680 nm environ.

7. Dispositif de filtrage selon l'une quelconque des revendications précédentes, **caractérisé en ce que** la lumière incidente passe par un système optique convergent et le réflecteur de plage spectrale est disposé de façon oblique par rapport à un axe optique du système optique convergent, en particulier sous un angle d'environ 40° à environ 50°.

8. Dispositif de filtrage selon la revendication 7, **caractérisé en ce que** le réflecteur de plage spectrale est disposé entre le système optique convergent et le foyer de celui-ci.

9. Dispositif de filtrage selon l'une quelconque des revendications précédentes, **caractérisé en ce que** le réflecteur de plage spectrale comporte un foyer secondaire pour la lumière réfléchie par filtrage.

10. Dispositif de filtrage selon l'une quelconque des revendications précédentes, **caractérisé en ce que** la lumière passant par le réflecteur de plage spectrale est concentrée sur un absorbeur.

11. Dispositif de filtrage selon l'une quelconque des revendications précédentes, **caractérisé en ce que** le réflecteur secondaire comporte un revêtement rouge et/ou jaune sur son côté éclairé par le réflecteur de plage spectrale, en particulier avec un colorant fluorescent.

12. Dispositif de filtrage selon l'une quelconque des revendications précédentes, **caractérisé en ce qu'**un convertisseur est disposé dans la lumière réfléchie par filtrage, en particulier une cellule solaire.

13. Serre avec un dispositif de filtrage selon l'une quelconque des revendications précédentes, en particulier avec une enveloppe, un dispositif d'éclairage et/ou un dispositif de guidage de lumière avec une cheminée éolisolaire.
